# EUROPÄISCHE PATENTANMELDUNG

(11) **EP 2 384 960 A1**
(43) Veröffentlichungstag der Anmeldung: **09.11.2011**
(21) Anmeldenummer: 11164547.9
(22) Anmeldetag: 03.05.2011
(51) Int. Cl.: B62J 23/00, B62J 27/00

(54) **Schutzvorrichtung zum Anbringen an einem Handgriff**

(30) Priorität: 03.05.2010 DE 202010006315 U
(71) Anmelder: Werner, Oliver, 80469 München (DE)
(72) Erfinder: Werner, Oliver, 80469 München (DE)
(74) Vertreter: nospat Patent- und Rechtsanwälte Naefe Oberdorfer Schmidt

(57) **Zusammenfassung**

Die Erfindung betrifft eine Schutzvorrichtung zum Anbringen an einer von einem Bediener zu betätigenden Handgriffeinrichtung (2) aufweisend zumindest einen die Handgriffeinrichtung (2) überkragenden Schutzbügel (4), wobei der Schutzbügel (4) beidseitig der Handgriffeinrichtung (2) relativ zu dieser oder zu einem die Handgriffeinrichtung (2) tragenden Lenker (3) befestigt ist, wobei die Schutzvorrichtung (1) öffnungsfähig ist und eine Auslöseeinrichtung (11) aufweist, mittels der zumindest ein Teilabschnitt (4a, 4b) des Schutzbügels (4) aus einem durch diesen versperrten Fluchtweg (W) für die Hand des Bedieners den Fluchtweg (W) freigebend wegbewegbar ist und/oder der Schutzbügel (4) als Ganzes aus einer Solllage aus dem Fluchtweg (W) wegschwenkbar ist.

## Beschreibung

Die Erfindung betrifft eine Schutzvorrichtung nach dem Oberbegriff des Anspruchs 1.

Eine gattungsgemäße Schutzvorrichtung ist aus der US 2008/0264198 A1 bekannt. Aus dieser Druckschrift ist eine Schutzvorrichtung mit einem Schutzbügel bekannt, welche einendig am freien Ende eines Zweiradlenkers befestigt ist und anderendig mit einem Joch in Verbindung steht, wobei das Joch mittels weiterer Befestigungseinrichtungen im Mittenbereich eines Zweiradlenkers befestigt ist. Eine solche Schutzvorrichtung ist aufwendig in der Herstellung und besitzt ein relativ hohes Gewicht, was insbesondere im Einsatz an Rennfahrzeugen unerwünscht ist. Des Weiteren wird eine derartige Schutzvorrichtung als unergonomisch empfunden, was viele Fahrer dazu verleitet, solche Schutzvorrichtungen nicht zu verwenden. Diese geringe Akzeptanz ist nicht zuletzt auf die mangelnden Einstellbarkeit dieser Vorrichtung auf die persönlichen Bedürfnisse des Fahrers zurückzuführen. Insbesondere die weit auseinander liegenden Befestigungspunkte am Lenker stellen bei gekrümmten Lenkern ein Problem dar.

Zudem besteht die Gefahr, dass sich der Fahrer des Zweirades z. B. bei einem Sturz nicht ausreichend schnell und ungehindert vom Fahrzeuglenker trennen kann, so dass es insbesondere bei einem Sturz, bei dem der Fahrer über den Lenker des Zweirades geschleudert wird, die Gefahr besteht, dass er sich mit seinen Händen/Unterarmen in der Schutzbügeleinrichtung verfängt. Hierdurch können schwere Verletzungen, wie z. B. Quetschungen oder gar Knochenfrakturen entstehen.

Aus der EP 1 852 341 A2 ist eine Handschutzeinrichtung für Zweiradlenker bekannt, welche einseitig innerhalb einer Handgriffeinrichtung des Lenkers am Lenkerrohr befestigt ist und mittels eines Kragarms und einer Abweiserschale die Hände des Fahrers vor unerwünschter mechanischer äußerer Einwirkung schützen soll.

Derartige Handschutzeinrichtungen weisen insbesondere im Sturzfall keine ausreichende Stabilität auf, vielmehr besteht die Gefahr, dass im Sturzfall, die Abweisereinrichtung verbogen wird und die Hand des Fahrers am Handgriff quetschen kann. Auch kann ein Bruch auftreten und so für einen weiteren Schutzfall/Unfall die Schutzwirkung zu Nichte machen.

Aufgabe der Erfindung ist es daher, eine Schutzvorrichtung anzugeben, die insbesondere kostengünstig herstellbar ist und ein geringes Gewicht aufweist.

Die Erfindung soll weiterhin eine Schutzeinrichtung angeben, die individuell und einfach auf die ergonomischen Bedürfnisse des Fahrers einstellbar ist.

Gleichzeitig soll eine hohe Stabilität gegenüber unerwünschter mechanischer äußerer Einflüsse sicher gestellt werden und die Hand des Fahrers am Handgriff zuverlässig vor diesen Einflüssen geschützt werden. Gleichzeitig soll gewährleistet sein, dass im Falle eines Sturzes des Fahrers keine Verletzungsgefahr von der Schutzvorrichtung ausgeht und sich der Fahrer im Unfall-Fall leicht vom Fahrzeug trennen kann. Außerdem soll ein zuverlässiger Schutz von Armaturen des Fahrzeugs, beispielsweise Brems-/Kupplungshebeln oder anderen Bedienelementen, welche sich in der Nähe des Handgriffs eines Zweiradlenkers befinden gewährleistet sein. Des Weiteren soll die Schutzvorrichtung insbesondere für den Einsatz im Offroad-Bereich, z. B. an Fahrrad-, Motorrad-, Quad- und ATV-Lenkern optimiert sein. Eine weitere Aufgabe der Erfindung ist es, eine Schutzvorrichtung anzugeben, die nach einem Sturz wieder verwendbar bzw. nur mit wenigen Handgriffen wieder aktivierbar ist.

Diese Aufgaben werden mit einer Schutzvorrichtung mit den Merkmalen des Anspruchs 1 gelöst. Vorteilhafte Ausführungsformen sind in den abhängigen Ansprüchen angegeben.

Erfindungsgemäß wird dies mit einer Schutzvorrichtung zum Anbringen an einer von einem Bediener zu betätigenden Handgriffeinrichtung erreicht, die zumindest einen die Handgriffeinrichtung überkragenden Schutzbügel besitzt, wobei der Schutzbügel beidseitig der Handgriffeinrichtung relativ zu dieser oder zu einem die Handgriffeinrichtung tragenden Lenker befestigt ist. Die Erfindung zeichnet sich insbesondere dadurch aus, dass die Schutzvorrichtung entweder öffnungsfähig ist oder als Ganzes aus einer äußere Kräfte abweisender Solllage wegschwenkbar ausgestaltet ist. Hierzu weist sie eine Auslöseeinrichtung auf, mittels der zumindest ein Teilabschnitt des Schutzbügels aus einem durch diesen versperrten Fluchtweg W für die Hand des Bedieners den Fluchtweg W freigebend wegbewegbar ist. Alternativ kann der Schutzbügel auch als Ganzes aus dem Fluchtweg W wegschwenkbar ausgebildet sein.

Als Schutzbügel im Sinne der Erfindung ist jedwede Abweisereinrichtung zu verstehen, die die Handgriffeinrichtung zumindest teilweise, bevorzugt vollständig überspannt und somit für eine Abweisung von von außen auftretenden unerwünschten Kräften, z.B. Schlägen oder dergleichen sorgt. Beispielsweise ist ein Schützbügel im Sinne der Erfindung auch ein Fächer von mehreren Schutzbügeln, die in einer Frontalansicht auf ein Zweirad übereinander angeordnet sind und gegebenenfalls zwischen sich Schlitze einschließen.

Ebenso ist unter dem Begriff "Schutzbügel" im Sinne der Erfindung beispielsweise eine Schutzschale, also ein schalenartiges Gebilde zu verstehen, welches geeignet ist, entsprechende Schläge, Einschläge von Gegenständen oder dergleichen abzuhalten.

Gemäß einer besonderen Ausführungsform ist der Schutzbügel zumindest einendig gelenkig gelagert und stützt sich im Falle des Auftretens unerwünschter äußerer mechanischer Einwirkung (Kraft F_{U}) anderendig an einer Abstützeinrichtung ab.

Eine solche Abstützeinrichtung kann beispielsweise der Lenker selbst, die Handgriffeinrichtung, ein Lagerbock oder ein Teilabschnitt des Schutzbügels selbst sein.

Die Auslöseeinrichtung kann eine Sollbruchstelle des Schutzbügels sein, welche im Fluchtfall, d. h. beim Auftreten einer Kraft F_{F}, die von der Hand oder dem Unterarm des Bedieners von innen her auf den Bügel einwirkt, bricht, so dass zumindest ein Teilabschnitt des Schutzbügels den Fluchtweg W für die Hand des Bedieners freigibt und somit die Gefahr des Verhakens innerhalb der Schutzbügeleinrichtung vermindert ist.

Gemäß einer weiteren Ausführungsform der Erfindung ist die Auslöseeinrichtung eine Rutsch- und/oder Rastkupplung zwischen dem Schutzbügel und der Abstützeinrichtung. Je nachdem wie schwergängig die Rutsch- und/oder Rastkupplung ausgebildet ist, kann in vorteilhafter Weise die Auslösekraft, bei der die Öffnung der Schutzvorrichtung bzw. des Schutzbügels erfolgt, vorbestimmt eingestellt werden.

Gemäß einer weiteren Ausführungsform der Erfindung ist die Auslöseeinrichtung eine Hülse, welche in einer Sollbetriebstellung des Schutzbügels eine Trennstelle zwischen zwei Teilabschnitten des Schutzbügels und angrenzende Endbereiche dieser Teilabschnitte umschließt oder ummantelt und beim Auftreten des Fluchtfalles brechen kann oder sich elastisch verformen kann. Eine solche Hülse kann beispielsweise aus einem elastischen Schlauchmaterial gebildet sein oder ein dünnwandige Metallhülse sein, die beim Auftreten entsprechender Kräfte brechen kann. In einer Weiterbildung der Erfindung kann die Hülse auch eine Kunststoffummantelung des Schutzbügels sein, wobei innerhalb der Kunststoffummantelung eine Trennstelle des Bügels angeordnet ist.

Unter dem Auftreten des "Fluchtfalles" ist erfindungsgemäß zu verstehen, dass ein Unfallereignis oder ein Sturzereignis des Fahrers stattfindet, bei dem sichergestellt werden muss, dass die Hand des Fahrers bei möglichst geringer Krafteinwirkung durch den Schutzbügel den Lenker in alle denkbaren Richtungen ungehindert oder nahezu ungehindert verlassen kann. Die Verwirklichung dieser Anforderung ist die erfindungsgemäße Grundaufgabe. Unter der Kraft F_{U}, welche oben bereits als unerwünschte äußere Krafteinwirkung bezeichnet wurde, sind alle möglichen mechanischen Einwirkungen zu verstehen, die beim Betrieb eines Kraftrades, insbesondere im Rennbetrieb auftreten können, und gegebenenfalls zu Verletzungen der Hand des Fahrers führen können. Solche äußere unerwünschten mechanischen Krafteinwirkungen sollen von der Schutzeinrichtung zuverlässig von der Hand des Fahrers abgehalten werden. Beispielsweise sind solche unerwünschten Einwirkungen, Kollisionen mit anderen Fahrzeugen, Kollisionen mit in eine Fahrbahn oder eine Rennstrecke hereinragenden Teilen, z. B. im Offroad-Bereich hereinragende Äste oder dergleichen. Des Weiteren können Steinschläge durch aufgewirbelte Steine eines vorausfahrenden Fahrzeuges solche Kräfte darstellen.

Eine weitere solche unerwünschte Einwirkung kann beispielsweise die Fahrbahn selbst sein, nämlich dann, wenn der Fahrer mit der Hand am Lenker stürzt und der Lenker selbst mit der Fahrbahn in Kontakt gerät. Hierbei ist es besonders wünschenswert, dass verhindert wird, dass die Hand des Fahrers beim Sturz oder während des Sturzes seitlich vom Lenker abrutschen kann und somit in einem besonders ungünstigen Fall das Motorrad mit seinem Lenkerende auf die Hand stürzen kann und Quetschungen oder Schürfungen der Hand zwischen Fahrbahn und Lenkerende hervorrufen kann.

Unter der Kraft F_{F}" welche im Fluchtfall auftritt, sind diejenigen Kräfte gemeint, die im oben genannten Unfall-Fall von der Hand oder einem Unterarm des Fahrers vom Inneren des vom Bügel umschlossenen Raumes auf diesen einwirken können. Diese Kräfte sollen so gering wie möglich gehalten werden, damit es möglichst zu keiner Verletzung des Fahrers kommt.

Der Begriff Fluchtweg W, der im Rahmen dieser Anmeldung benutzt wird, soll als mögliche Bewegungsbahn der Hand oder des Unterarms des Fahrers im Unfall/Sturzfall verstanden werden. Selbstverständlich ist ein solcher Fluchtweg nicht eindeutig vordefinierbar, vielmehr handelt es sich hierbei um einen gewissen Raumbereich insbesondere oberhalb und in Fahrtrichtung vor dem Lenker, der möglichst mit geringem Kraftaufwand im Sturzfall freigegeben werden soll, damit ein ungehindertes Trennen des Fahrers vom Fahrzeug stattfinden kann.

Gemäß einer weiteren bevorzugten Ausführungsform ist die Auslöseeinrichtung ein Stift, welcher in die Stirnseiten der jeweiligen Enden von Teilabschnitten des Schutzbügels eingesetzt ist und sich im Unfall-Fall entweder verformen kann und aus diesen stirnseitigen Vertiefungen herausrutschen kann oder im Unfall-Fall bricht und somit Teilabschnitte des Schutzbügels, die schwenkbar gelagert sind, sich frei aus dem Fluchtweg heraus bewegen bzw. herausschwenken können. In einer besonders einfach ausgestalteten Ausführungsform sind die Teilabschnitte der Schutzbügel in ihren Endbereichen nicht mechanisch miteinander verbunden, sondern liegen lediglich durch eine Federvorspannung im Bereich ihrer Schwenkgelenke aneinander an. Damit es nicht zu unbeabsichtigten Verrutschen der Enden der Teilabschnitte der Schutzbügel kommt, greifen diese bevorzugt formschlüssig ineinander. Die Auslöseeinrichtung, wie sie im Anspruch 1 definiert wird, ist für diese Ausführungsform also die Trennstelle selbst im Zusammenspiel mit der federnden Vorbelastung der Schwenklagerung der Bügelteilabschnitte.

Geeignete Materialien für die Schutzbügel können widerstandsfähige Arten von Kunststoff, beispielsweise faserverstärkte Kunststoffe oder auch Metalle sein.

Gemäß einer weiteren bevorzugten Ausführungsform kann die Auslöseeinrichtung auch als Magnet ausgebildet sein, welcher im Normalbetrieb die freien Enden zweier Bügelteilabschnitte zueinander fixiert und im Unfall-Fall diese leicht trennbar freigeben kann.

Gemäß einer weiteren bevorzugten Ausführungsform ist die Auslöseeinrichtung ein elastisches Element, welches zwischen den Endbereichen der Teilabschnitte angeordnet ist und im Fluchtfall eine Weitung des Schutzbügels erlaubt. Die erfindungsgemäße Aufgabe ist hierbei dadurch erfüllt, dass durch das elastische Element, welches insbesondere bevorzugt zugelastisch, aber druckstarr ist, eine ausreichend große Weitung des vom Bügel umschlossenen Bereiches ermöglicht und so die sichere Trennung des Fahrers vom Fahrzeug gewährleistet.

Alternativ zu den scharnierartig schwenkbaren Lagerungen der Teilabschnitte der Schutzbügel können auch Sollknickstellen vorgesehen sein, die beispielsweise in die Teilabschnitte der Schutzbügel integriert sind. Wesentlich für die Erfindung ist nicht eine um eine geometrisch genau definierte Achse erfolgende Schwenkung der Teilbereiche der Schutzbügel. Es muss vielmehr sicher gestellt sein, dass ein irgendwie geartetes Wegbewegen aus dem Fluchtweg sicher gestellt ist. Hierzu eignen sich Sollknickstellen insbesondere. Zudem sind diese Sollknickstellen hinsichtlich der Kosten und des Gewichts besonders vorteilhaft.

Eine weitere Alternative der Erfindung besteht darin, den Schutzbügel selbst nicht teilbar zu gestalten, sondern den Schutzbügel selbst relativ zur Handgriffeinrichtung so schwenkbar zu lagern, dass dieser im Fluchtfall als Ganzes aus dem Fluchtweg weggeschwenkt werden kann. Diese Maßnahme löst die erfindungsgemäßen Aufgaben für sich bereits zufriedenstellend. Die schwenkbare Lagerung des Schutzbügels als Ganzes um eine Schwenkachse kann aber auch zusätzlich zu den bereits vorgenannten Maßnahmen stattfinden. Eine mögliche Lage der Schwenkachse ist die Mittelachse des Lenkerrohrs im Bereich der Handgriffeinrichtungen. Die Wahl dieser Schwenkachse lässt sich besonders einfach umsetzen, da mit den Befestigungseinrichtungen der Schutzbügel am Lenker bereits eine Klemmung erfolgen kann, die im Unfall-Fall ausreichend nachgiebig ausgebildet ist.

Zweckmäßigerweise ist der Schwenkbereich um die Schwenkachse für den Bügel als Ganzes aus einer Nulllage nach oben und nach unten begrenzt, d. h. bis zu einem Maximalwinkel α nach oben und einem Maximalwinkel β aus der Nulllage nach unten verschwenkbar. Beim Erreichen des maximalen Verschwenkwinkels läuft der verschwenkte Bügel als Ganzes vorteilhafter auf einen Anschlag auf.

Der Maximalwinkel α liegt insbesondere in einem Bereich zwischen 10° und 45°, insbesondere zwischen 10° und 30°. Der Maximalwinkel β liegt bevorzugt in einem Bereich zwischen 10° und 60°, insbesondere in einem Bereich zwischen 10° und 45°. Diese Winkelbereiche haben sich hinsichtlich der ergonomischen Anforderungen und der aufgrund der Schwenkbarkeit reduzierten Verletzungsgefahr für den Fahrer als besonders hilfreich erwiesen. Schwenkwinkel α, β unter 10° sind zwar auch denkbar, und nutzen den Gedanken der Erfindung, es können jedoch in der Praxis wohl nur unzureichend hohe Schutzwirkungen durch die relativ geringe Ausweichmöglichkeit des Bügels erwartet werden.

Zweckmäßigerweise ist der Schutzbügel als Ganzes federnd vorbelastet in der Nulllage, die der Schutzbügel in einer gewünschten Betriebsstellung einnehmen soll, festgelegt.

Gemäß einer weiteren bevorzugten Ausführungsform kann die Auslöseeinrichtung eine elastische Niet sein, welche zumindest ein Ende des Schutzbügels mit einem Lagerbock verbindet. Im Unfall-Fall kann diese Niet aus einer geeigneten Stufensacklochbohrung im Lagerbock oder aus einer Bohrung im Bügel beim Erreichen einer Maximalkraft ausknöpfen und somit den Fluchtweg freigeben.

Gemäß einer weiteren bevorzugten Ausführungsform kann der Schutzbügel zur Freigabe des Fluchtweges selbst elastisch ausgebildet sein, wobei die Härte des Materials für den Schutzbügel dann so auszuwählen ist, dass durch das Verbiegen des Schutzbügels im Fluchtfall keine unerlaubt hohen Kräfte auf die Hände/Unterarme des Fahrers einwirken.

Zweckmäßigerweise weist die Schutzvorrichtung einen Wind- und/oder Schmutzabweiser auf und ist insbesondere zur Verwendung an Zweiradlenkern, insbesondere Fahrrad- und/oder Motorradlenkern oder Quadlenkern und dergleichen ausgebildet.

Vorteilhaft ist, die Auslöseeinrichtung wiederverschließbar auszugestalten, damit im Falle eines Unfalles eine einmal ausgelöste Schutzvorrichtung, z.B. im Rennbetrieb, schnell wieder verschlossen werden kann und somit bei Wiederaufnahme des Rennens die volle Schutzwirkung der Schutzvorrichtung erhalten oder wiedererlangt wird.

In einer besonders bevorzugten Ausführungsform ist die Schutzvorrichtung als Kombination der oben beschriebenen beiden Alternativen ausgebildet, d.h., diese Ausführungsform besitzt zum einen einen öffnungsfähigen Schutzbügel, welcher in der Lage ist, bei Bedarf einen Fluchtweg W freizugeben. Andererseits ist dieser öffnungsfähige Schutzbügel in einer Normal- oder Nullstellung um eine Achse, beispielsweise die Längsmittelachse des Lenkerrohrers bereichsweise schwenkbar ausgebildet (vgl. vorbeschriebene Maximalwinkel α und β). Die Verschwenkbarkeit um die Winkel α und β ausgehend von einer Nulllage kann beispielsweise mittels einer Federvorspannung erfolgen, so dass der Schutzbügel enthaltend eine Auslöseeinrichtung "nach Art einer Saloontür" um die Nulllage federnd vorbelastet schwenkbar ist. Diese Ausführungsform birgt mehrere Vorteile. Zum einen kann die Verschwenkbarkeit des Schutzbügels (noch mit geschlossener Auslöseeinrichtung) insbesondere im Gewühl eines Starterfeldes oder bei anderweitigen eng aneinander geratenden Fahrzeugen ein Verhaken starr montierter Bügel verhindern. Zum zweiten ist es vorteilhaft, dass durch die federnde Schwenkbarkeit der die Auslöseeinrichtung enthaltenden Schutzbügel als Ganzes eine Anpassung der Lage des noch geschlossenen Schutzbügels an die Wirkrichtung der tatsächlich auftretenden Kraft F_{F} erfolgen kann, bevor die Auslöseeinrichtung öffnet. Mit anderen Worten richtet sich also der über einen Schwenkbereich schwenkbar gelagerte Schutzbügel vor dem Auslösen der Auslöseeinrichtung zuerst nach der tatsächlich auftretenden Richtung des Kraftvektors F_{F} aus. Hierdurch wird sichergestellt, dass eine in einem für die Auslösung der Auslöseeinrichtung nicht idealen Winkel auftretende Kraft F_{F} nach einem Verschwenken des Bügels doch zur Auslösung der Auslöseeinrichtung ausreichen kann, da ein größerer Betrag der ungeeignet auftretenden Kraft F_{F} in Richtung der Öffnungsrichtung der Auslöseeinrichtung weist und für die Auslösung der Auslöseeinrichtung zur Verfügung steht. Ein solches Schwenken des Hebels in Richtung auf eine optimale Auslöserichtung hin vermindert weiter das Verletzungsrisiko und sichert ein zuverlässiges Öffnen der Auslöseinrichtung.

Im Folgenden wird die Erfindung anhand der Zeichnung beispielhaft näher erläutert. Es zeigen:
Fig. 1 schematisch eine Draufsicht auf eine erste Ausführungsform der erfindungsgemäßen Schutzvorrichtung;
Fig. 2 schematisch eine Draufsicht auf eine zweite Ausführungsform der erfindungsgemäßen Schutzvorrichtung;
Fig. 3 schematisch eine Draufsicht auf eine weitere Ausführungsform der erfindungsgemäßen Schutzvorrichtung;
Fig. 4 bis 9 ausschnittsweise schematisch verschiedene Ausführungsformen für eine Auslöseeinrichtung im Sinne der Erfindung;
Fig. 10 schematisch eine weitere Ausführungsform/eine weitere Alternative der Erfindung in einer Seitenansicht auf den Fahrzeuglenker.

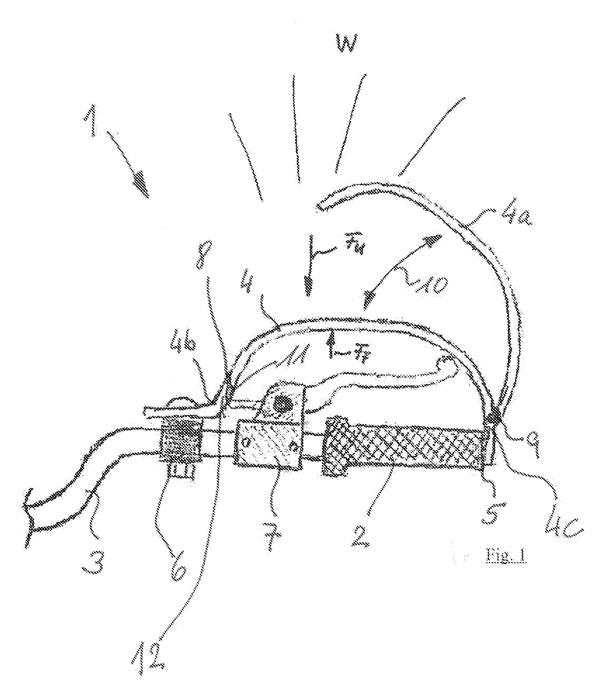

Eine erfindungsgemäße Schutzvorrichtung 1 (Figur 1) zum Anbringen an eine Handgriffeinrichtung 2 eines Zweirades besitzt einen Schutzbügel 4. Der Schutzbügel 4 ist einendig im Bereich eines Endes 5 des Lenkers 3 befestigt. Anderendig ist der Schutzbügel 1 mittels einer Befestigungseinrichtung 6 am Lenker 3, insbesondere benachbart zur Handgriffeinrichtung 2 oder zu einer Armatur 7 des Zweirades befestigt. Der Schutzbügel 1 weist einen ersten Teilabschnitt 4a und einen zweiten Teilabschnitt 4b auf. Die Teilabschnitte 4a, 4b sind im Bereich einer Trennstelle 8 voneinander trennbar. Der erste Teilabschnitt 4a des Schutzbügels 4 ist in einem Schwenklager 9 gelenkig beweglich in einer Pfeilrichtung 10 gelagert. Im Bereich der Trennstelle ist eine Auslöseeinrichtung 11 vorhanden, welche beim Auftreten einer Fluchtkraft F_{F} ausgelöst durch die Hand oder den Unterarm oder ein Handgelenk des Bedieners/Fahrers des Zweirades öffnet und den ersten Teilabschnitt 4a in seiner Schwenkrichtung entlang der Pfeilrichtung 10 freigibt. Im geschlossenen Zustand des Schutzbügels 4 wirkt der zweite Teilabschnitt 4b als Abstützeinrichtung 12, so dass der erste Teilabschnitt 4a und der zweite Teilabschnitt 4b des Schutzbügels beim Auftreten einer unerwünschten äußeren mechanischen Einwirkung (F_{U}) als geschlossener stabiler Bogen wirkt und diese Kräfte F_{U} zuverlässig von der Hand des Bedieners oder der Armatur des Zweirades fernhält.

Im gezeigten Ausführungsbeispiel ist die Trennstelle 8 bzw. die Auslöseeinrichtung 11 im Bereich der Befestigungseinrichtung 6 angeordnet, so dass der erste Teilabschnitt 4a und der zweite Teilabschnitt 4b ungleich groß sind. Die Freigabe eines Fluchtweges W für die Hand des Fahrers wird nahezu ausschließlich durch das Verschwenken des ersten Teilabschnittes 4a des Stützbügels 4 entlang der Pfeilrichtung 10 bewirkt.

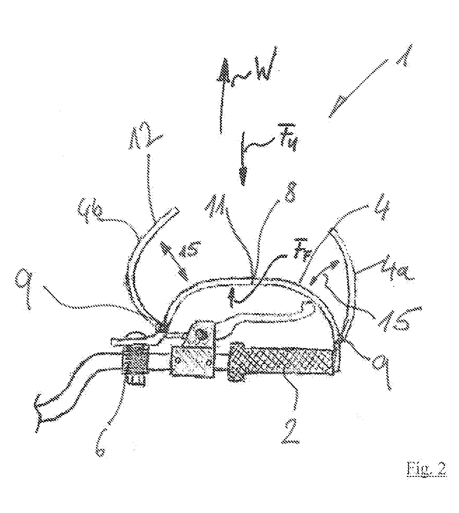

Bei einer weiteren Ausführungsform der erfindungsgemäßen Schutzvorrichtung gemäß Fig. 2 ist der wesentliche Aufbau identisch zur Ausführungsform gemäß Fig. 1, so dass im Folgenden lediglich die Unterschiede näher beschrieben werden.

Die Trennstelle 8 sitzt bei dieser Ausführungsform etwa mittig bezüglich dem vom Schutzbügel 4 überkragten Bereich. Der zweite Teilabschnitt 4b ist im Bereich der Befestigungseinrichtung 6 ebenfalls mit einem Schwenklager 9 gelenkig gelagert. Im Auslösefall, d. h. im Unfall-Fall beim Auftreten einer Fluchtkraft F_{F} öffnet die Auslöseeinrichtung 11, welche im Bereich der Trennstelle 8 angeordnet ist und gibt beide Teilabschnitte 4a, 4b um jeweils deren Schwenklager 9 gelenkig schwenkbar frei (Pfeilrichtungen 15).

Klarstellend sei hier angefügt, dass die Lage der Trennstelle 8 nicht auf die Positionen gemäß den Ausführungsformen der Figuren 1 und 2 beschränkt ist. Selbstverständlich kann die Lage der Trennstelle 8 und gegebenenfalls auch die Lage der Auslöseeinrichtung 11 in weiten Grenzen beliebig entlang des Verlaufs des Schutzbügels 4 gewählt werden kann. Als besonders bevorzugt hat sich jedoch ein Bereich herausgestellt, der zumindest am äußeren Ende des Lenker endseitigen Bereich des Schutzbügels 4 ein bezüglich des Lenkers feststehendes Stück 4c lässt, damit ein seitliches Abrutschen der Hand vom Handgriff 2 auch bei geöffnetem Schutzbügel, d.h. bei ausgelöster Auslöseeinrichtung 11 möglichst vermieden ist. In einem solchen Fall empfiehlt es sich, das Schwenklager 9 entsprechend weit vom Handgriff 2 weg anzuordnen.

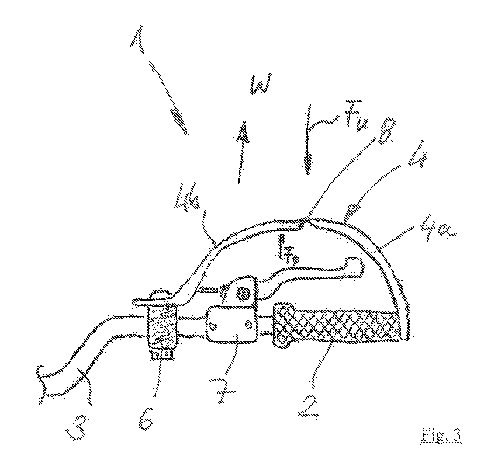

Bei einer weiteren Ausführungsform der Erfindung (gemäß Fig. 3) ist der Schutzbügel 4 aus zwei Teilabschnitten 4a, 4b ausgebildet. Im Bereich der Trennstelle 8 berühren sich die beiden Enden der Teilabschnitte 4a, 4b oder weisen zueinander einen geringen Abstand auf.

Bei dieser Ausführungsform sind die Schwenklager nicht vorhanden. Die Beweglichkeit der Teilabschnitte 4a, 4b zur Freigabe des Fluchtweges W beim Auftreten einer Kraft F_{F} ist bei dieser Ausführungsform dadurch erreicht, dass die Teilabschnitte 4a, 4b aus einem geeignet elastischen Material gebildet sind, so dass beim Auftreten der Kraft F_{F} die Teilabschnitte 4a, 4b bezüglich ihrer anderendigen Befestigungspunkte verbogen werden und so den Fluchtweg W freigeben. Beim Auftreten einer abzuhaltenden Kraft Fᵤ werden die Teilabschnitte 4a, 4b ebenfalls ein Stück elastisch verformt, bis die Enden der Teilabschnitte 4a, 4b im Bereich der Trennstelle 8 aufeinander zu liegen kommen und sich gegenseitig abstützen. Somit ist beim Auftreten der Kraft Fᵤ wieder ein stabiler Schutzbügel 4 gebildet.

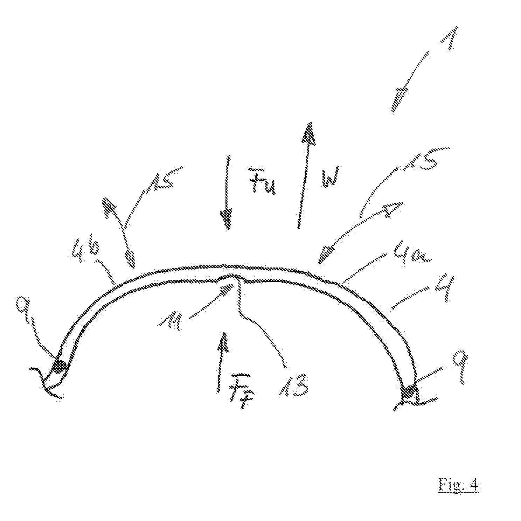

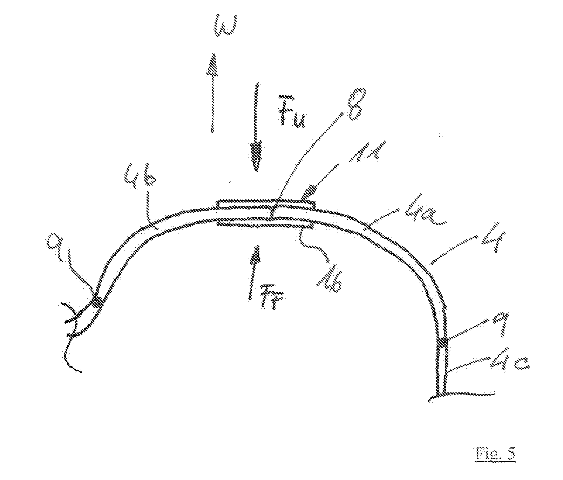

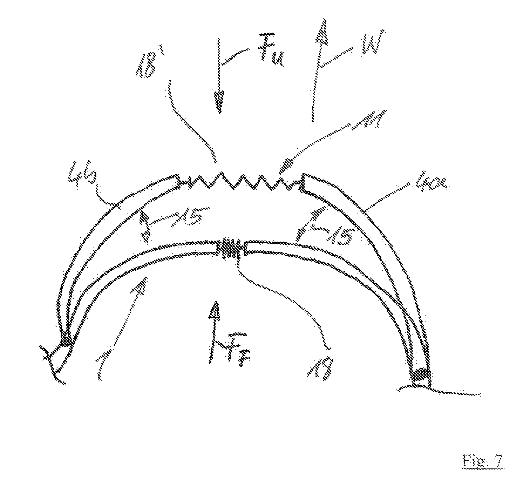

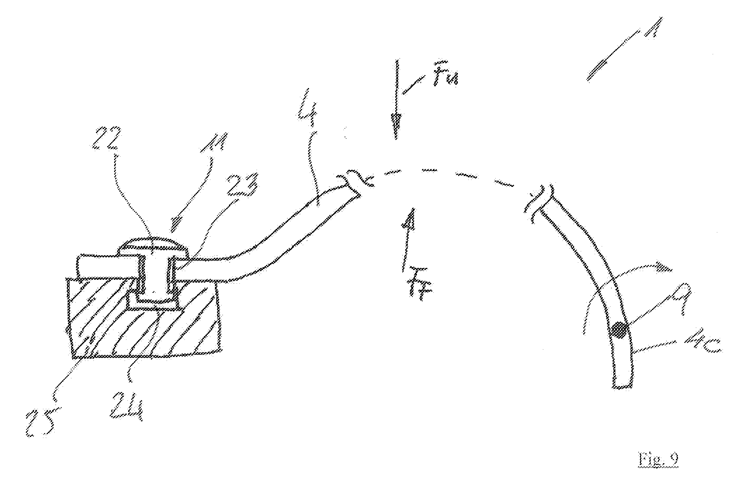

Im Folgenden werden anhand der Fig. 4 bis 9 verschiedene Ausführungsformen der Auslöseeinrichtungen beschrieben. Die Beschreibung erfolgt anhand eines prinzipiellen Aufbaus, der in etwa dem Aufbau der Fig. 2 entspricht. Selbstverständlich kann die Anordnung der Auslöseeinrichtung 11 oder der Trennstelle 8 entlang des Bügels variieren, so dass selbstverständlich auch Ausführungsformen gemäß Fig. 1 mit diesen Auslöseeinrichtungen realisierbar sind.

In den Fig. 4 bis 9 sind aus Vereinfachungsgründen lediglich die Teilabschnitte 4a, 4b des Schutzbügels 4 dargestellt, wobei selbstverständlich die Montage der Schutzvorrichtung 1 entsprechend dem im Rahmen der vorangegangen beschriebenen Zeichnungen liegt.

Bei der Ausführungsform gemäß Fig. 4 ist die Auslöseeinrichtung 11 als Sollbruchstelle 13 ausgebildet. Die Sollbruchstelle 13 ist ein im Wesentlichen begrenzter verjüngter Bereich des Schutzbügels 4 innerhalb dem eine verringerte Materialstärke vorliegt. Die Sollbruchstelle ist hinsichtlich der Materialauswahl und Materialstärke so dimensioniert, dass bei einem Auftreten einer Kraft F_{F} diese bricht bevor es zu Frakturen oder Quetschungen der Hand des Fahrers kommt. Bei dieser Ausführungsform ist erst beim Brechen der Sollbruchstelle 13 eine Trennstelle vorhanden. Im Sollzustand bzw. im Normalbetrieb der Schutzvorrichtung ist die Trennstelle nicht vorhanden. Nach dem Brechen der Sollbruchstelle 13 sind der erste Teilabschnitt 4a und der zweite Teilabschnitte 4b um deren jeweiliges Schwenklager 9 in einer Pfeilrichtung 15 verschwenkbar, so dass hierdurch der Fluchtweg W freigegeben ist.

Bei einer weiteren Ausführungsform der Auslöseeinrichtung 11 für die erfindungsgemäße Schutzvorrichtung 1 ist die Auslöseeinrichtung 11 durch eine Hülse 16 gebildet, die im Bereich der freien Enden der Teilabschnitte 4a, 4b des Schutzbügels über die freien Enden und einen benachbarten Bereich hierzu gestülpt ist und diesen ummantelt.

Wie bereits vorbeschrieben sind die Teilabschnitte 4a, 4b in ihren Schwenklagern 9 gelenkig gelagert. Bei Auftreten einer Fluchtkraft F_{F} kann die Hülse 16 sich entweder elastisch verformen oder brechen und so die Teilabschnitte 4a, 4b freigeben. Diese können im Bereich ihrer Trennstelle sich voneinander wegbewegen und so den Fluchtweg W freigeben. Die Teilabschnitte 4a, 4b bewegen sich hierbei um ihre Schwenklager 9.

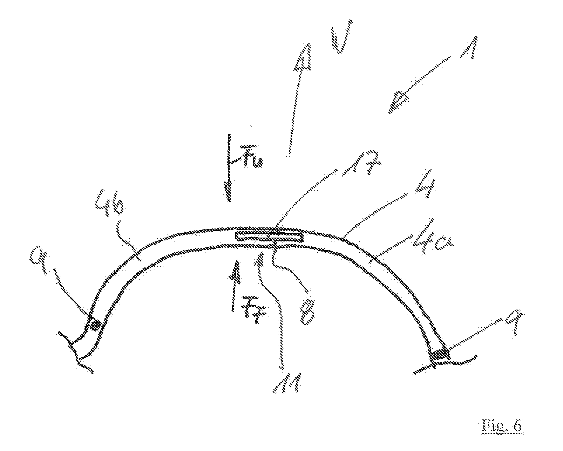

Eine weitere Ausführungsform der Auslöseeinrichtung ist in Fig. 6 gezeigt. Die Auslöseeinrichtung 11 ist durch einen Stift 17 gebildet. Der Stift 17 sitzt in korrespondierenden Vertiefungen, die vom stirnseitigen Ende der Teilabschnitte 4a, 4b in diese eingebracht sind. Die Teilabschnitte 4a, 4b sind wiederum in ihren Schwenklagern 9 gelenkig gelagert. Bei einem Auftreten einer Fluchtkraft F_{F} kann der Stift 17, wenn dieser aus einem nachgiebigen oder elastischen Material gebildet ist unter Verbiegung aus einer der stirnseitigen Sacklochaufnehmungen gleiten und so die Teilabschnitte 4a, 4b des Schutzbügels 4 freigeben. Ist der Stift 17 aus einem relativ harten Material ausgebildet, so kann dieser beim Auftreten der Kraft F_{F} gezielt brechen und so für eine Bewegungsfreigabe der Teilabschnitte 4a, 4b sorgen.

Zeichnerisch nicht dargestellt, kann die Ausführungsform gemäß Figur 6 auch derart variiert werden, dass der Stift 17 einseitig in einer Sacklochvertiefung in einem der Abschnitte 4a oder 4b sitzt. Der korrespondierende andere Abschnitt 4a, 4b besitzt eine nutartige Schlitzausnehmung, in welche der überkragende Teil Stifts 17 durch Schwenken der Abschnitte 4a, 4b um die Schwenklager 9 eingelegt oder eingesetzt werden kann. Diese Schlitzausnehmung ist beispielsweise mit einem federbelasteten Clip verschließbar. Bei dieser Ausführungsform handelt es sich insbesondere um eine in einfacher Art und Weise wiederverschließbare Auslöseeinrichtung 11, die insbesondere im Rennbetrieb durch wenige Handgriffe wieder in ihre Betriebsstellung, d.h. in die Stellung verbracht werden kann, in der der Schutzbügel 4 seine Schutzwirkung entfaltet.

Zeichnerisch nicht dargestellt, aber zur Erfindung gehörend kann die Auslöseeinrichtung auch ein Abreißbolzen in einem Schwenklager 9 sein, der nach Überschreiten einer maximal zulässigen Kraft F_{F} bricht und somit den Schutzbügel 4 aus dem Fluchtweg W wegschwenkbar freigibt.

Gemäß einer weiteren Ausführungsform der Erfindung ist die Auslöseeinrichtung 11 ein elastisches Element 18, welches zwischen den freien Enden der Teilabschnitte 4a, 4b angeordnet ist. In einer Ausgangsstellung bilden die Teilabschnitte 4a, 4b und das elastische Element einen für unerwünscht auftretende Kräfte Fᵤ einen geschlossenen Schutzbügel 4. Im Falle eines Unfalles, d. h. beim Auftreten einer Fluchtkraft F_{F} kann sich das elastische Element dehnen (vgl. Bezugszeichen 18'). Auf Grund der Dehnung des elastischen Elementes können die Teilabschnitte 4a, 4b des Schutzbügels 4 zumindest bereichsweise ein Stück entlang der Pfeilrichtung 15 schwenken, so dass der Raum zwischen dem Schutzbügel 1 und der Handgriffeinrichtung vergrößert, also aufgeweitet wird. Hierdurch ist ebenfalls die Unfall- und Verletzungsgefahr im Falle eines Sturzes reduziert. Das elastische Element ist insbesondere druckstarr und biege- oder zugelastisch ausgebildet.

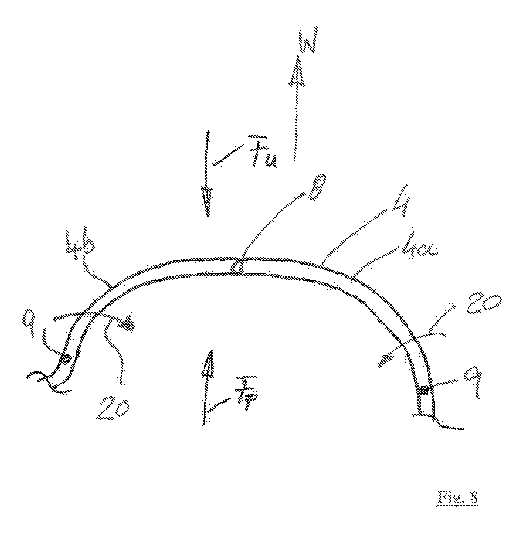

Bei einer weiteren Ausführungsform der erfindungsgemäßen Schutzvorrichtung gemäß Fig. 8 sind die Teilabschnitte 4a und 4b in ihren Schwenklagern 9 federnd vorgespannt gelagert, derart, dass die Teilabschnitte 4a, 4b im Bereich ihrer Trennstelle 8 aneinander gedrückt werden. Die federnde Vorspannung erfolgt somit entlang einer Pfeilrichtung 20. Im Bereich der Trennstelle sind die Enden der Teilabschnitte 4a, 4b zueinander korrespondierend formschlüssig ausgebildet. Beispielsweise weist der erste Teilabschnitt 4a ein konvex halbkugelig geformtes Ende auf. Der Teilabschnitt 4b weist ein korrespondierend konkav vertieftes Ende auf, so dass die beiden Enden der Teilabschnitte 4a, 4b im Bereich der Trennstelle 8 formschlüssig ineinander greifen. Dies dient hauptsächlich dazu, die bei Auftreten einer Kraft F_{U}, sofern sie einseitig z. B. auf einen der Teilabschnitte 4a, 4b auftrifft, zuverlässig aufzufangen ohne dass die Enden der Teilabschnitte im Bereich der Trennstelle 8 aneinander abgleiten. Die federnde Vorspannung entlang der Pfeilrichtung 20 ist derart gewählt, dass beim Auftreten einer Kraft F_{F} die Teilabschnitte 4a, 4b leicht öffnen können und somit ein den Fluchtweg W freigeben.

In einer weiteren Ausführungsform der erfindungsgemäßen Schutzvorrichtung 1 ist die Auslöseeinrichtung 11 als elastisch verformbare Niet 22 ausgebildet, welche in einer Öffnung 23 des Schutzbügels 4 und in einem Sackloch 24 eines Lagerbocks 25 sitzt. Das Sackloch 24 ist innenseitig gestuft, so dass eine Hintergreifung der Niet an den Stufen der Sacklochbohrung erfolgen kann. Die Niet ist aus einem zumindest bereichsweise elastischen Material ausgebildet derart, dass beim Auftreten einer Kraft F_{F} auf den Schutzbügel 4 ein Ausknöpfen der Niet entweder aus der Sacklochbohrung 24 des Lagerbocks 25 oder ein Ausknöpfen des Schutzbügels 4 relativ zur Niet 22 erfolgen kann. Selbstverständlich ist es auch möglich, die Niet aus einem festen, harten Material auszubilden und den Lagerbock aus einem entsprechend weichen nachgiebigen Material auszubilden, so dass ein sicheres Ausknöpfen gewährleistet ist.

Wie oben bereits beschrieben kann das Schwenklager 9 entweder als gelenkartiges Lager mit einer Schwenkachse ausgebildet sein oder in Form eines elastischen Bügelabschnittes 4a, 4b realisiert sein.

Darüber hinaus haben sich auch sogenannte Gummi-Metallelemente bewährt, welche einendig an den Bügelabschnitten 4a und anderendig am Lenker befestigt sind. Durch ein solches Gummi-Metalllager, welches beispielsweise in der geschlossenen Bügelstellung nicht oder nur unwesentlich vorgespannt montiert ist, wird eine Funktionsvereinigung dahingehend erreicht, dass durch das Gummi-Metalllager sowohl eine Wegschwenkbarkeit der Bügelabschnitte 4a und gegebenenfalls 4b erreicht wird, wie auch eine federnde Zurückstellung derselben nach einem Auslöseereignis.

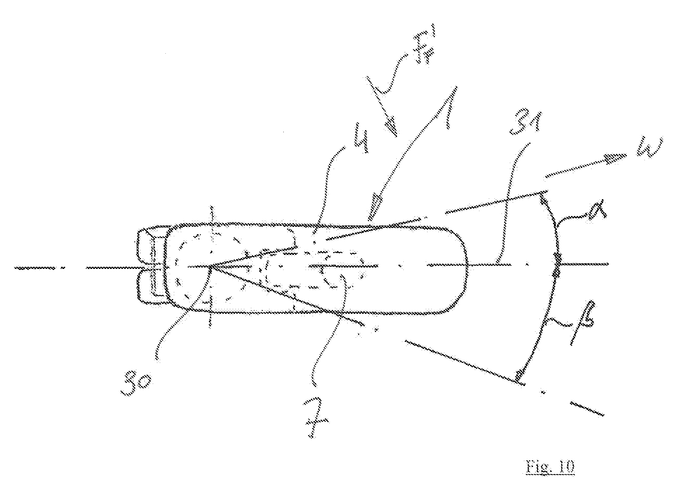

Des Weiteren sind solche Gummi-Metalllager, die beispielsweise als zylinderförmiger Weichteil- oder Gummiabschnitt mit endseitigen Gewindestiften oder Gewindebohrungen zur Befestigung von Anbauteilen ausgebildet sind, in den allermeisten Fällen so ausgebildet, dass eine elastische Verformung des Gummi-Metalllagers in viele Richtungen erfolgen kann, also keine genau definierte, vorgegebene Schwenkachse vorgeben. Eine derart ausgestattete Schutzvorrichtung kann also zum einen im Unfall-fall ein Öffnen von Bügelabschnitten 4a und 4b gewährleisten. Je nach Auftreten von entsprechenden Kräften F_{F} kann ein derart mit Gummi-Metalllagern gelagerter Bügel auch als Ganzes, beispielsweise analog zu der Ausführungsform gemäß Fig. 10 (vgl. Beschreibung unten) in einer Richtung, die den Winkeln α und β entspricht, verschwenkt werden.

Insofern kann bei der Verwendung von Gummi-Metalllagern eine weitestmöglich gehende Beweglichkeit der Schutzbügel realisiert werden und trotzdem im Falle des Auftretens von abzuhaltenden Kräften Fᵤ ein stabiler Schutzbügel bereitgestellt werden.

Ein weiterer Vorteil von solchen Gummi-Metalllagern ist, dass neben der oben beschriebenen erhöhten Beweglichkeit unter anderem auch eine Funktionsvereinheitlichung dahingehend erreicht wird, dass Gummi-Metalllager darüber hinausgehend zur Befestigung von Bügelabschnitten am Lenker geeignet sind. Bei geeigneter Ausbildung der Gummi-Metalllager kann so gegebenenfalls auf separate Befestigungseinrichtungen am freien Lenkerende oder im inneren Bereich des Lenkers verzichtet werden. Dies trägt wesentlich zur kostengünstigen Herstellung und einfachen Montage wie auch zur Erhöhung der Betriebssicherheit und zur Verringerung des Verletzungsrisikos bei.

Bei einer weiteren Alternative der Erfindung gemäß Fig. 10 ist der Schutzbügel 4 als Ganzes um eine Schwenkachse 30 - bevorzugt begrenzt - schwenkbar gelagert. Beispielsweise ist der Schutzbügel 4 aus einer Nulllage 31 um einen Maximalwinkel α nach oben und um einen Maximalwinkel β nach unten verschwenkbar. Die Nulllage 31 wird beispielsweise durch eine federnde Vorspannung des Schutzbügels 4 erreicht. Bei einer Verschwenkung um den Winkel α nach oben und um den Winkel β läuft der Schutzbügel bevorzugt auf einen Anschlag, so dass der Schwenkbereich zuverlässig begrenzt ist. Bei einem Sturz oder Unfall des Fahrers kann durch eine Verhakung der Hand im Schutzbügel 4 die notwendige Kraft aufgebracht werden, um beispielsweise eine Verschwenkung um den Winkel β nach unten zu bewirken und somit den Schutzbügel als Ganzes aus dem Fluchtweg wegzuschwenken und diesen freizugeben. Der erfinderische Gedanke dieser Ausführungsform kann sowohl für sich alleine als auch in Kombination mit den bereits vorbeschriebenen Ausführungsformen Anwendung finden.

In einer besonderen Ausführungsform der Alternative gemäß Figur 10 weist der Schutzbügel 4 eine Auslöseeinrichtung 11 auf und ist zudem um die Schwenkachse 30 schwenkbar gelagert. Insbesondere erfolgt die schwenkbare Lagerung federnd vorgespannt um eine Nulllage (maximaler Auslenkwinkel α nach oben und β nach unten) nach Art einer Saloontür. Im Falle einer ungünstigen Kraftrichtung der Kraft F_{F}' kann im Sturzfall der Schutzbügel 4 zunächst z.B. innerhalb des Schwenkwinkels β ein Stück nach unten ausweichen. Hierdurch wird die auf den Schutzbügel 4 einwirkende Kraftkomponente der Kraft F_{F}' betragsmäßig größer, so dass ein sicheres Auslösen der Auslöseeinrichtung 11, die wie in den Ausführungsbeispielen gemäß den Figuren 1 bis 9 beschaffen sein kann, gewährleistet ist. Insoweit können also die beiden unterschiedlichen Wirkmechanismen der Ausführungsformen gemäß Figuren 1 bis 9 und der der Figur 10 auch besonders vorteilhaft kombiniert werden.

Bei der erfindungsgemäßen Schutzvorrichtung ist von besonderem Vorteil, dass die Akzeptanz der Schutzvorrichtung bei den Fahrern von Zweirädern, insbesondere im Bereich des Rennsportes erhöht ist, da gefährliche Verletzungsrisiken minimiert sind und der Schutz der Hand im Rennbetrieb oder Fahrbetrieb gewährleistet ist. Zudem ist die Vorrichtung einfach in der Herstellung und besitzt nur ein geringes Gewicht, was insbesondere im Rennsport von Vorteil ist.

Die erfindungsgemäße Schutzvorrichtung zeichnet sich des Weiteren durch eine hervorragende Einstellbarkeit aus. Dies liegt insbesondere daran, dass die Befestigungspunkte der Schutzvorrichtung relativ zum Handgriff nahe beieinander liegen. In diesem Bereich verlaufen die Lenkrohre üblicherweise geradlinig oder nahezu geradlinig. Somit kann bei einer erfindungsgemäßen Schutzvorrichtung die Ausrichtung des Schutzbügels um eine Mittelachse des Lenkerrohrs in weiten Bereichen leicht eingestellt werden. In gleicher Weise ist somit auch die Nulllage/Solllage des Bügels in weiten Bereichen voreinstellbar. Hieraus resultiert eine hohe Praktikabilität, insbesondere im Renneinsatz, was zu einer hohen Akzeptanz bei den Fahrern führt. Im Endeffekt ist somit also durch eine vermehrten Benutzung einer solchen Schutzvorrichtung das allgemeine Verletzungsrisiko deutlich reduziert.

Die Schutzvorrichtung zeichnet sich weiterhin insbesondere dadurch aus, dass die Schwenkachse 30 eine Mittelachse eines Lenkerrohres im Bereich der Handgriffeinrichtung 2 ist.

Die Schutzvorrichtung zeichnet sich weiterhin insbesondere dadurch aus, dass die Schutzvorrichtung 1 einen Schmutz- und/oder Windabweiser aufweist.

Die Schutzvorrichtung zeichnet sich weiterhin insbesondere dadurch aus, dass die Schutzvorrichtung 1 insbesondere zur Verwendung an Zweiradlenkern, insbesondere Fahrrad- und/oder Motorradlenkern ausgebildet ist.

Die Schutzvorrichtung zeichnet sich weiterhin insbesondere dadurch aus, dass dass der Schutzbügel 4 einendig mittels einer Befestigungseinrichtung 6 am Lenker 3 direkt benachbart zur Handgriffeinrichtung 2 oder einer Armatur 7 des Zweirades befestigt ist und anderendig am freien Ende des Lenkers 3 befestigt ist.

Die Schutzvorrichtung zeichnet sich weiterhin insbesondere dadurch aus, dass die Auslöseeinrichtung 11 wiederverschließbar ist, so dass sie nach einem Sturz, der ein Auslösen der Auslöseeinrichtung bewirkt hat, durch erneutes Verschließen wiederverwendbar ist.

Als bevorzugte Herstellungsverfahren kommen insbesondere auch für klein- und mittelgroße Serien gegenwärtig und mit hoher Wahrscheinlichkeit auch in naher Zukunft mehr und mehr 3D-Kunststoffdruckverfahren in Betracht, bei denen beispielsweise mittels Lasersintern eine auch individuell anpassbare Geometrie der Bügel an beispielsweise Anschlussgeometrien von verschiedenen Lenkern verschiedener Hersteller und/oder auch an ergonomische Randbedingungen des Fahrers anpassbar sind. Des Weiteren ermöglicht ein Lasersinter-Herstellverfahren beispielsweise einen Schutzbügel aus Kunststoff (PA 12), der hinsichtlich der Stabilität und Widerstandsfähigkeit alle Anforderungen erfüllt und hinsichtlich des Gewichts einer Ausführungsform aus Metall, beispielsweise Aluminium, deutlich überlegen ist.

### Bezugszeichenliste:

- 1: Schutzvorrichtung
- 2: Handgriffeinrichtung
- 3: Lenker
- 4: Schutzbügel
- 4a: 1. Teilabschnitt
- 4b: 2. Teilabschnitt
- 4c: feststehender Abschnitt
- 5: Ende
- 6: Befestigungseinrichtung
- 7: Armaturen
- 8: Trennstelle
- 9: Schwenklager
- 10: Pfeilrichtung
- 11: Auslöseeinrichtung
- 12: Abstützeinrichtung
- 13: Sollbruchstelle
- 15: Pfeilrichtung
- 16: Hülse
- 17: Stift
- 18: Elastisches Element
- 20: Pfeilrichtung
- 22: Niet
- 23: Öffnung
- 24: gestuftes Sackloch
- 25: Lagerbock
- 30: Schwenkachse
- 31: Nulllage
- W: Fluchtweg
- F_{F}, F_{F}': Kraft
- Fᵤ: Kraft

## Patentansprüche

1. Schutzvorrichtung zum Anbringen an einer von einem Bediener zu betätigenden Handgriffeinrichtung (2) aufweisend zumindest einen die Handgriffeinrichtung (2) überkragenden Schutzbügel (4), wobei der Schutzbügel (4) beidseitig der Handgriffeinrichtung (2) relativ zu dieser oder zu einem die Handgriffeinrichtung (2) tragenden Lenker (3) befestigt ist, **dadurch gekennzeichnet, dass** die Schutzvorrichtung (1) öffnungsfähig ist und eine Auslöseeinrichtung (11) aufweist, mittels der zumindest ein Teilabschnitt (4a, 4b) des Schutzbügels (4) aus einem durch diesen versperrten Fluchtweg (W) für die Hand des Bedieners den Fluchtweg (W) freigebend wegbewegbar ist und/oder der Schutzbügel (4) als Ganzes aus einer Solllage aus dem Fluchtweg (W) wegschwenkbar ist.

2. Schutzvorrichtung nach Anspruch 1, **dadurch gekennzeichnet, dass** der Schutzbügel (4)zumindest einendig gelenkig gelagert ist und sich im Falle des Auftretens unerwünschter äußerer mechanischer Einwirkung (Kraft F_{U}) anderendig an einer Abstützeinrichtung (12) abstützt, wobei insbesondere die Abstützeinrichtung (12) der Lenker (3), die Handgriffeinrichtung (2), ein Lagerbock (25) oder ein Teilabschnitt (4a, 4b) des Schutzbügels (4) selbst ist.

3. Schutzvorrichtung nach Anspruch 1 oder 2, **dadurch gekennzeichnet, dass** die Auslöseeinrichtung (11) eine Sollbruchstelle (13) des Schutzbügels (4) ist, welche im Fluchtfall (Kraft F_{F}) bricht, so dass zumindest ein Teilabschnitt (4a, 4b) des Schutzbügels (4) einen Fluchtweg (W) für die Hand des Bedieners freigibt, oder dass die Auslöseeinrichtung (11) eine Rutsch- und/oder Rastkupplung zwischen dem Schutzbügel (4) und der Abstützeinrichtung (12) ist.

4. Schutzvorrichtung nach einem der vorhergehenden Ansprüche, **dadurch gekennzeichnet, dass** die Auslöseeinrichtung (11) eine Hülse (16) ist, welche in einer Betriebsstellung eine Trennstelle (8) zwischen zwei Teilabschnitten (4a, 4b) des Schutzbügels (4) und angrenzende Endbereiche derselben umschließt und beim Auftreten des Fluchtfalles bricht oder sich elastisch verformt.

5. Schutzvorrichtung nach einem der vorhergehenden Ansprüche, **dadurch gekennzeichnet, dass** die Auslöseeinrichtung (11) ein Stift (17) ist, welcher im Bereich der Trennstelle (8) zwischen Teilabschnitten (4a, 4b) des Schutzbügels (4) in die Endbereiche des Schutzbügels (4) eingesteckt ist und sich im Fluchtfall elastisch verbiegt oder bricht und so die Teilabschnitte (4a, 4b) der Schutzvorrichtung (4) freigibt, wobei insbesondere die Teilabschnitte (4a, 4b) des Schutzbügels (4) um ihre Schwenkachse (9) federbelastet sind und im Bereich der Trennstelle (8) formschlüssig ineinander greifen.

6. Schutzvorrichtung nach einem der vorhergehenden Ansprüche, **dadurch gekennzeichnet, dass** die Auslöseeinrichtung (11) ein Magnet ist, welcher im Normalbetrieb Endbereiche der Teilabschnitte (4a, 4b) des Schutzbügels (4) zusammenhält und im Fluchtfall diese freigibt.

7. Schutzvorrichtung nach einem der vorhergehenden Ansprüche, **dadurch gekennzeichnet, dass** die Auslöseeinrichtung (11) ein elastisches Element (18) ist, welches zwischen den Endbereichen der Teilabschnitte (4a, 4b) angeordnet ist und im Fluchtfall eine Weitung des Schutzbügels (4) erlaubt, wobei insbesondere das elastische Element (18) hinsichtlich Zug und/oder Biegung elastisch und hinsichtlich Druckbelastung starr oder im Wesentlichen starr ausgebildet ist.

8. Schutzvorrichtung nach einem der vorhergehenden Ansprüche, **dadurch gekennzeichnet, dass** die schwenkbare Lagerung (9) der Teilabschnitte (4a, 4b) des Schutzbügels (4) durch Sollknickstellen, die in die Teilabschnitte (4a, 4b) des Schutzbügels (4) integriert sind, ausgebildet ist.

9. Schutzvorrichtung nach einem der vorhergehenden Ansprüche, **dadurch gekennzeichnet, dass** der Schutzbügel (4) ausgehend von einer Nulllage um eine Schwenkachse (30) als Ganzes aus dem Fluchtweg (W) wegschwenkbar ausgestaltet ist.

10. Schutzvorrichtung nach einem der vorhergehenden Ansprüche, **dadurch gekennzeichnet, dass** der Schutzbügel (4) aus der Nulllage um einen Maximalwinkel α nach oben und um einen Maximalwinkel β nach unten schwenkbar ist, wobei die Winkel α und β gleich groß oder unterschiedlich groß sein können, wobei bevorzugt der Winkel α kleiner ist als der Winkel β.

11. Schutzvorrichtung nach einem der vorhergehenden Ansprüche, **dadurch gekennzeichnet, dass** beim Erreichen der Maximalwinkel α, β der Schutzbügel (4) gegen einen starren Anschlag läuft und/oder der Schutzbügel (4) in der Nulllage federvorgespannt gehalten ist.

12. Schutzvorrichtung nach einem der vorhergehenden Ansprüche, **dadurch gekennzeichnet, dass** die Auslöseeinrichtung (11) eine elastische Niet (22) ist, welche im Fluchtfall aus dem Schutzbügel (4) und/oder dem Lagerbock (25) ausknöpft.

13. Schutzvorrichtung nach einem der vorhergehenden Ansprüche, **dadurch gekennzeichnet, dass** der Schutzbügel (4) zur Freigabe des Fluchtweges (W) verformbar insbesondere elastisch verformbar ausgebildet ist oder die Schutzvorrichtung als Schwenklager (9) und/oder als Befestigungseinrichtung (6) elastische Elemente, z. B. Gummi-Metalllager, aufweist.
